Europäisches Patentamt

European Patent Office

Office européen des brevets

(11) Publication number: **0 225 137 B1**

(12) **EUROPEAN PATENT SPECIFICATION**

(45) Date of publication of patent specification: **10.03.93**  (51) Int. Cl.⁵: **C07F 7/04**

(21) Application number: **86309111.2**

(22) Date of filing: **20.11.86**

(54) **Process for producing a tetraalkoxysilane.**

(30) Priority: **20.11.85 JP 260368/85**

(43) Date of publication of application:
**10.06.87 Bulletin 87/24**

(45) Publication of the grant of the patent:
**10.03.93 Bulletin 93/10**

(84) Designated Contracting States:
**DE FR GB**

(56) References cited:
**GB-A- 343 165**
**GB-A- 2 018 800**
**JP-A-56 118 088**
**US-A- 4 207 247**

**PATENT ABSTRACTS OF JAPAN, vol. 5, no.
195, 11th December 1981, page 74 C 83; &
JP-A-56 118 088 (SHOWA DENKO K.K.)
16-09-1981**

(73) Proprietor: **Chisso Corporation
6-32, Nakanoshima 3-chome Kita-ku
Osaka-shi Osaka-fu(JP)**

(72) Inventor: **Inaba, Shinichi
4-212, Chikuji
Minamata-shi Kumamoto-ken(JP)**
Inventor: **Honda, Shuichi
11-1, Jinnai 2-chome
Minamata-shi Kumamoto-ken(JP)**
Inventor: **Koga, Kohji
11-1, Jinnai 2-chome
Minamata-shi Kumamoto-ken(JP)**

(74) Representative: **Ruffles, Graham Keith et al
MARKS & CLERK 57-60 Lincoln's Inn Fields
London WC2A 3LS (GB)**

**Description**

This invention relates to a process for producing tetramethoxysilane. More particularly it relates to an improved process for producing tetramethoxysilane by reacting silicon and methyl alcohol in the presence of an alkali metal alkoxide catalyst.

Heretofore, tetraalkoxysilanes have been commercially produced by dehydrochlorinating reaction of $SiC\ell_4$ with alcohols. In this process, however, polymer formation occurs as a side reaction due to byproduct hydrogen chloride, and there is also the problem that steps should be taken to prevent corrosion of the reaction equipment by hydrogen chloride.

In order to overcome the problems of the above process there has been proposed a process of directly reacting silicon with an alcohol in the presence of an alkali metal alkoxide. For example, there have been proposed the process of A. Lenz et al using sodium methylate (Japanese patent publication No. 45-8217/1970), the process of W. Flick et al using a compound selected from ether alcohols and alkanolamides (Japanese laid-open patent application No. 54-138523/1979) and the process of Delaval et al using a waste matter powder formed in the direct preparation of methyl (or phenyl) chlorosilane containing at least 30% of silicon and also using, as a diluent, an aromatic hydrocarbon having a boiling point of 190°C or higher and a melting point of 40°C or lower (French patent No. 2,332,993). JP-A-56 118 088 discloses the preparation of tetraalkoxysilanes by reaction of silicon with an alcohol in the presence of an alkali catalyst together with a polyhydric alcohol and crown ether.

When a tetraalkoxysilane is produced by reacting silicon with an alcohol in the presence of an alkali metal alkoxide, the following conditions are desirable:

(1) the alkali metal alkoxide catalyst should be well soluble in the reaction mixture;

(2) the desired reaction temperature should be capable of being maintained;

(3) a wide range of silicon-containing materials from fine particles to coarse particles may be used as raw material;

(4) when coarse silicon particles are used, the reaction rate does not lower so much as compared with the use of fine silicon particles;

(5) the yield of the tetraalkoxysilane based on silicon as raw material should be high;

(6) the continuation and termination of the reaction should be capable of being controlled; and

(7) the tetraalkoxysilane can be produced on a commercial scale and, preferably, continuously.

According to an embodiment of the A. Lenz et al process, a 38% solution (1 Kg) of sodium methylate is added to ferrosilicon in the form of fine particles (silicon, 90% by weight; particle diameter, about 10 $\mu$m), followed by reacting the mixture at 100°C for 2 hours, so that sodium methylate crystallizes during the final period of the reaction; and in order to dissolve the methylate, fresh methanol (195 g) is further added. However, in such a process, the solubility of the alkali metal alkoxide in the reaction mixture is low. On the other hand, another embodiment of the A. Lenz et al process shows that when the reaction is conducted using a 15% solution of sodium methylate, addition of fresh methanol during the final period of the reaction after 4 hours is unnecessary, but in order to raise the solubility of the alkali metal alkoxide, a long time is required.

Further, according to still another embodiment of the A. Lenz et al process, when ferrosilicon in the form of coarse particles (silicon, about 90% by weight; average particle diameter, about 1 cm) is used, a reaction time as long as 180 hours is required and the usage of the sodium methylate catalyst is very large.

On the other hand, according to an embodiment of the W. Flick et al process, when purified silicon (Si, 99.8 ~ 100% by weight; particle diameter <10$\mu$), tetraethoxysilane, ethanol, sodium ethoxide and ethylglycol are reacted at a reaction temperature of 140°C to 155°C, the quantity of hydrogen generated reduces to about 1/20 of that at the initial period of the reaction, so that the reaction temperature must be maintained by gradually reducing the ethanol feed during the course of the reaction; hence operation is troublesome.

According to an embodiment of the Delaval et al process, silicon having a purity of about 72%, methanol, tetramethoxysilane, sodium methoxide and an aromatic hydrocarbon such as diisopropylbenzene as a diluent are reacted at 120°C. However, according to our own experiments, when silicon having a purity of 94 %, methanol, tetramethoxysilane, sodium methoxide and tetralin or dibenzyltoluene as a diluent were reacted, a portion of sodium methoxide adhered onto the wall of the reaction vessel together with silicon, and the reaction rate of silicon having an average particle diameter of 100 $\mu$m was low (see Comparative examples 1 and 2 below).

It is an object of the present invention to provide an improved process for producing tetramethoxysilane.

According to the invention there is provided a process for the production of tetramethoxy by reacting silicon with methyl alcohol in the presence of an alkali metal alkoxide catalyst, in which silicon has an

2

average particle diameter of 40$\mu$m or less and the reaction is carried out in the additional presence of from 1 to 10,000 parts by weight, per 100 parts by weight of silicon, of an ether which is a linear ether of the formula:

$$R^1 - O - (X-O)_m - R^2$$

in which $R^1$ and $R^2$ are each a $C_1$-$C_6$ alkyl, phenyl or benzyl group; X is a linear $C_2$-$C_8$ alkylene group optionally substituted with a $C_1$-$C_4$ alkyl, $C_1$-$C_4$ alkoxy, alkoxyalkyl (in which each alkyl is a $C_1$-$C_4$ alkyl), phenyl or cyclohexyl group; and $m$ is an integer from 1 to 8, provided that when $m$ is 2 or more, the groups X may be different.

Examples of silicon which may be used in the present invention are so-called metallic silicon of a high purity obtained by reducing silica stone and alloys of silicon with other metals such as iron.

The content of silicon in the metallic silicon and/or silicon-metal alloy is suitably 80% by weight or more, preferably 90% by weight or more.

In order to avoid decomposition of the alkali metal alkoxide and/or tetramethoxysilane, it is preferred to use methanol which has been dehydrated with a drying agent such as calcium chloride, zeolite, aluminium chloride, anhydrous sodium sulphate, anhydrous magnesium sulphate, silica gel, or a molecular sieve.

Examples of the alkali metal alkoxide catalyst are alkoxides of lithium, sodium, potassium and rubidium. Alkali metal alkoxides having a methyl group, the same kind of alkyl group as that of the methyl alcohol, are usually used, but those having a different kind of alkyl group may also be used.

The alkali metal alkoxide may be prepared separately and used as it is or in the form of a solution or suspension of the alkali metal alkoxide and the methanol alcohol. Further, silicon and the methanol may be reacted in advance in a reaction vessel to prepare the alkali metal alkoxide, which may be then used as it is.

The ether compound used in the present invention is one having a linear chain as defined above.

Examples of ether compounds of formula (I) are ethylene glycol dimethyl ether, ethylene glycol dipropyl ether, ethylene glycol dibutyl ether, trimethylene glycol dibutyl ether, tetramethylene glycol dibutyl ether, diethylene glycol dimethyl ether, diethylene glycol diethyl ether, diethylene glycol dibutyl ether, diethylene glycol benzyl methyl ether, triethylene glycol dimethyl ether, triethylene glycol ethyl methyl ether, tetraethylene glycol dimethyl ether, tetraethylene glycol diethyl ether, tetraethylene glycol dibutyl ether, pentamethylene glycol dimethyl ether, pentaethylene glycol dimethyl ether, 1,2,3-tributoxypropane, 2,2-bis-(methoxymethyl)-1,3-dimethoxypropane, 2,2-dimethyl-1,3-dimethoxypropane, etc. Of these, lower alkyl alcohols of polyethylen glycols are preferred and diethylene glycol dimethyl ether and triethylene glycol dimethyl ether are particularly preferred.

The ether compounds may be commercially available products or may be prepared for use in the invention.

Thus for example, according to Williamson's synthesis method, NaOMe is reacted with the - OH group of an ether to obtain an ether having a - ONa group, which is then reacted with a halogenated hydrocarbon RX to prepare an ether compound having an alkoxy group -OR. In another method, an ether compound having an alkoxy group -OR can be obtained by the dehydration reaction of an ether having -OH group with an alcohol having -OH group.

The reaction of the present invention may be carried out either batchwise or continuously. The batchwise reaction is preferably carried out by introducing silicon, an alkali metal alkoxide and an ether compound into a reaction vessel, heating the inside of the reaction vessel to a definite temperature and thereafter carrying out the reaction while dropwise dropping a lower alkyl alcohol into the reaction vessel.

Further, a continuous, long time reaction may be carried out by successively adding raw material silicon into the reaction vessel in accordance with the quantity of silicon consumed by the reaction and also supplementing the quantities of raw material silicon, the catalyst and the ether compound corresponding to those which have been withdrawn from the reaction vessel.

In either the batchwise or the continuous reaction, it is possible to add, in advance, a certain quantity of tetramethoxysilane into the reaction system when initiating the reaction to thereby initiate the reaction rapidly.

The proportions of silicon and the methyl alcohol used in the process may be theoretically stoichiometric, but usually the amount of methyl alcohol fed is from 4 to 20 mols per gram atom of silicon contained in the silicon-containing material consumed by the reaction. However, the methyl alcohol may be added in excess of silicon, or to the contrary, silicon may be added in excess of the lower alkyl alcohol. Further, the methyl alcohol may be present in a small quantity when initiating the reaction and its quantity then gradually increased up to the above-mentioned proportion.

The amount of alkali metal alkoxide added is suitably from 0.1 to 100 parts by weight, preferably from 1 to 20 parts by weight per 100 by weight of the ether compound. If the amount is less than the above lower limit the reaction proceeds with difficulty while if it exceeds the upper limit, the cost not only increases, but also there is a fear that trouble with regard to solubility may occur.

Further, the quantity of the ether compound added is suitably from 1 to 10,000 parts by weight, preferably 100 to 5,000 parts by weight, per 100 parts by weight of raw material silicon. If the amount is less than the lower limit of the range, its effectiveness cannot be expected, while if it exceeds the upper limit, the effectiveness meeting with the increase of the quantity cannot be exhibited and hence such an excess quantity is meaningless.

The reaction temperature is suitably 50° to 400°, but in order to raise the reaction rate. it is preferred to carry out the reaction at 100°C or higher. By raising the reaction temperature to a suitable one and distilling off the thus formed tetramethoxysilane and unreacted methyl alcohol from the reaction vessel, it is possible to keep the volume of the reaction mixture nearly constant. By distilling the resulting distillate, it is possible to separate a tetraalkoxysilane having an increased purity and at the same time to recover unreacted methyl alcohol. Further, when the ether compound is contained in the distillate, it is possible to recover the ether compound by distillation. The recovered methyl alcohol and the ether compound thus recovered may be recirculated into the reaction vessel for reuse.

In the process of the present invention, the reaction pressure may be atmospheric or, if necessary, an elevated or a reduced pressure.

The thus produced tetramethoxysilane can be suitably used, for example, as an additive for preventing the coarse holes of concrete, cement, etc., a binding agent for moulding sand, a material for coating the surface of glass or metal together with various kinds of polymers, etc. and further it may be hydrolyzed and can be suitably used as the raw material for producing silicon dioxide of a high purity.

The effectiveness exhibited by the present invention is as follows.

(1) By adding a specified ether compound, the alkali metal alkoxide dissolved well in the reaction mixture; deposition of the alkali metal alkoxide and its adhesion onto the wall of the reaction vessel during the reaction are prevented; and it is possible to raise the reaction rate.

(2) By selecting a high boiling ether compound, it is possible to carry out the reaction at high temperatures. For example, when methanol having a boiling point of 65°C is used as alcohol, it is possible to maintain the reaction temperature at about 120°C by selecting triethylene glycol dimethyl ether as ether compound.

(3) By continuously distilling off the formed tetramethoxysilane together with unreacted methyl alcohol during the reaction, it is possible to easily recover these compounds.

(4) The yield of the tetraalkoxysilane relative to the silicon used is high, and the quantity of by-products other than hydrogen is neglegibly small.

(5) When the reaction is carried out by continuously feeding a methyl alcohol to the reaction system, it is possible to discontinue or reopen the reaction by discontinuing or reopening the feed of the methyl alcohol.

(6) By continuously feeding silicon and a methyl alcohol to the reaction system and distilling off the resulting tetramethoxysilane, etc. from the reaction system, it is possible to commercially continuously produce tetramethoxysilane.

In order that the invention may be well understood the following Examples are given by way of illustration only.

## Example 1

A continuous reaction was carried out in a stainless steel reaction vessel having about 40 ℓ capacity and equipped with a silicon-introducing pipe, an alcohol-introducing pipe, a vapor-distilling off pipe having condenser fitted thereto, a stirrer and a thermocouple thermometer.

Silicon (2.13 Kg; purity 94 % by weight; pure silicon content 2.00 Kg) having a nominal median diameter (particle diameter of 50 % by weight accumulated particles) of 20 $\mu$m, triethylene glycol dimethyl ether (9.00 Kg) and tetramethoxysilane (0.49 Kg) were introduced into the above reaction vessel and the contents were heated to 125°C with stirring, followed by dropwise dropping a methanol solution (2.50 Kg) of sodium methoxide (0.7 Kg) into the reaction vessel. After completion of the dropwise dropping, generation of hydrogen gas was observed.

A suspension of silicon in methanol (water content: 300 ppm) was then continuously fed to the reaction vessel and the reaction was continued while the temperature of the reaction mixture was kept at 120° - 125°C. The thus formed tetramethoxysilane together with methanol were distilled off.

The quantity of hydrogen generated per unit time was nearly constant during the reaction. After 45.9 hours, feed and heating of silicon and methanol were stopped. Silicon (about 2 Kg) remained in the reaction vessel.

The resulting distillate and cooled reaction mixture were analyzed according to gas chromatography. The results are shown in Table 1.

Example 2

Example 1 was repeated except that reaction was carried out for 61.5 hours, using silicon (purity: about 94 % by weight, nominal mediam diameter: 35 $\mu$m (a material having passed through 100 mesh sieve (mesh opening corresponding to 0.149 mm)). The results are shown in Table 1.

Table 1

| | Raw materials | | | Reaction time (hr) | Tetramethoxysilane | | |
|---|---|---|---|---|---|---|---|
| | Nominal median diameter of metallic silicon Dmed ($\mu$m) | Feeding rate of metallic silicon (Kg/hr) | Feeding rate of methanol (Kg/hr) | | Amount formed (Kg) | Yield based on metallic silicon fed (%) | Yield based on methanol (%) |
| Example 1 | 20 | 0.534 | 4.06 | 45.9 | 126.0 | 87.0 | 56.9 |
| Example 2 | 35 | 0.143 | 1.23 | 61.5 | 47.6 | 80.5 | 51.9 |

Examples 3- 5 and Comparative Examples 1 and 2

Into a 500 m$\ell$ capacity glass flask equipped with an alcohol-introducing tube, a vapor-distilling off tube having a condenser fitted thereto, a stirrer and a thermometer were introduced silicon (25 g) having various purities and nominal median diameters shown in Table 2, a 28 % methanol solution (28 g) of sodium methoxide and various kinds of ether compounds (50 g) shown in Table 2. The mixture in the flask was heated to 125°C with stirring, followed by continuously feeding methanol (water content: 300 ppm) at an addition rate of 0.33 m$\ell$/min to carry out batchwise reaction.

Generation of hydrogen gas in the flask was observed, and the resulting tetramethoxysilane together with unreacted methanol were distilled off while the temperature of the reaction mixture was kept at 115° ~ 125°C. In the respective experiments, the quantity of hydrogen generated decreased gradually accompanying the progress of the reaction. During the reaction, there was no adhesion of sodium methoxide, etc. onto the wall of the flask.

After completion of the reaction, the distillate and the reaction mixture were analyzed according to gas chromatography. The results are shown in Table 2. In this Table, silicon having a nominal median diameter of 100 $\mu$m corresponds to 60 mesh (mesh opening corresponding to 0.250 mm) pass and 200 mesh (mesh opening corresponding to 0.074 mm) on.

Comparative Examples 3 and 4

Examples 3 and 5 were repeated except that using silicon (25 g) having a purity and a numinal median diameter shown in Table 2, the ether compounds used in Examples 3 - 5 were replaced by tetralin or dibenzyl toluene. Solids containing sodium methoxide and silicon adhered onto the inner wall of the reaction vessel. The results of the reaction are shown in Table 2.

5

Table 2

| | Metallic Si | | Ether linkage-containing compound or hydrocarbon | | Reaction time | Tetramethoxysilane | |
|---|---|---|---|---|---|---|---|
| | Nominal median diameter Dmed (μm) | Purity (wt%) | | (g) | (hr) | Amount formed (g) | yield based on metallic Si fed (%) |
| Example 3 | 10.5 | 99 | Triethylene glycol dimethyl ether | 50 | 7.3 | 121.1 | 89.1 |
| " 4 | 22 | 99 | ditto | 50 | 7.6 | 104.0 | 76.6 |
| " 5 | 40 | 99 | ditto | 50 | 7.5 | 63.1 | 46.4 |
| Comp. Ex. 1 | 100 | 94 | ditto | 50 | 9.9 | 53.6 | 39.4 |
| Comp. Ex. 2 | 100 | 94 | Diethylene glycol dimethyl ether | 50 | 11.4 | 46.5 | 34.3 |
| Comp.ex. | 100 | 94 | Tetralin | 50 | 11.5 | 33.4 | 24.0 |
| Comp.ex. | 100 | 94 | Dibenzyltoluene | 50 | 9.0 | 29.1 | 21.4 |

**Claims**

1. A process for the production of a tetramethoxy silane by reacting silicon with methyl alcohol in the presence of an alkali metal alkoxide catalyst, in which the silicon has an average particle diameter of

40$\mu$m or less and the reaction is carried out in the additional presence of from 1 to 10,000 parts by weight, per 100 parts by weight of silicon, of an ether which is a linear ether of the formula:

$R^1 - O - (X-O)_m-R^2$

in which $R^1$ and $R^2$ are each a $C_1$-$C_6$ alkyl, phenyl or benzyl group; X is a linear $C_2$-$C_8$ alkylene group optionally substituted with a $C_1$-$C_4$ alkyl, $C_1$-$C_4$ alkoxy, alkoxyalkyl (in which each alkyl is a $C_1$-$C_4$ alkyl), phenyl or cyclohexyl group; and $\underline{m}$ is an integer from 1 to 8, provided that when $\underline{m}$ is 2 or more, the groups X may be different.

2. A process according to claim 1 characterized in that in the ether compound of formula (I), $R^1$ and $R^2$ are each a $C_1$-$C_4$ alkyl group; X is a $C_2$-$C_5$ linear alkylene group of 2 to 5 carbon atoms; and m is an integer of 1 to 5.

3. A process according to claim 2 characterized in that the ether is diethylene glycol dimethyl ether or triethylene glycol dimethyl ether.

4. A process according to any one of the preceding claims characterized in that the ether compound is added in an amount of 100 to 5,000 parts by weight per 100 parts by weight of silicon.

5. A process according to any one of the preceding claims characterized in that the alkali metal alkoxide is used in an amount of 0.1 to 100 parts by weight per 100 parts by weight of the ether compound.

6. A process according to any one of the preceding claims characterized in that the methyl alcohol is used in an amount of 4 to 20 mols per gram atom of silicon.

7. A process according to any one of the preceding claims characterized in that the reaction temperature is from 50 to 400°C.

**Patentansprüche**

1. Verfahren zur Herstellung eines Tetramethoxysilans durch Reaktion von Silicium mit Methanol in Gegenwart eines Alkalimetall-Alkoxid-Katalysators, bei welchem das Silicium einen mittleren Partikeldurchmesser von 40 $\mu$m oder weniger aufweist, und bei welchem die Reaktion zusätzlich in Gegenwart eines Ethers mit 1 bis 10.000 Gewichtsteilen pro 100 Gewichtsteilen Silicium durchgeführt wird, wobei der Ether ein linearer Ether der Formel

$R^1 - O - (X-O)_m-R^2$

ist, in welcher $R^1$ und $R^2$ jeweils eine $C_1$-$C_6$-Alkyl-, eine Phenyl-, oder eine Benzylgruppe repräsentieren; X eine lineare $C_2$-$C_8$ Alkylengrupppe ist, welche gegebenenfalls mit einer $C_1$-$C_4$-Alkyl-, $C_1$-$C_4$-Alkoxy-, Alkoxyalkyl- (bei welcher jedes Alkyl ein $C_1$-$C_4$ Alkyl ist), Phenyl- oder Cyclohexylgruppe substituiert ist; und $\underline{m}$ eine ganze Zahl von 1 bis 8 ist, wobei dann, wenn $\underline{m}$ zwei oder größer ist, die Gruppen X verschieden sein können.

2. Verfahren nach Anspruch 1, dadurch gekennzeichnet, daß in der Etherverbindung der Formel (I) $R^1$ und $R^2$ jeweils eine $C_1$-$C_4$ Alkylgruppe, X eine lineare $C_2$-$C_5$ Alkylengruppe mit zwei bis fünf Kohlenstoffatomen repräsentieren, und $\underline{m}$ eine ganze Zahl von 1 bis 5 ist.

3. Verfahren nach Anspruch 2, dadurch gekennzeichnet, daß der Ether Diethylenglykol-dimethylether oder Triethylenglykol-dimethylether ist.

4. Verfahren nach einem der voranstehenden Ansprüche, dadurch gekennzeichnet, daß die Etherverbindung mit einem Anteil von 100 bis 5.000 Gewichtsteilen pro 100 Gewichtsteilen Silicium zugegeben wird.

5. Verfahren nach einem der voranstehenden Ansprüche, dadurch gekennzeichnet, daß das Alkalimetall-Alkoxid mit einem Anteil von 0,1 bis 100 Gewichtsteilen pro 100 Gewichtsteilen der Etherverbindung verwendet wird.

6. Verfahren nach einem der voranstehenden Ansprüche, dadurch gekennzeichnet, daß das Methanol in einer Menge von 4 bis 20 Molen pro Grammatom Silicium verwendet wird.

7. Verfahren nach einem der voranstehenden Ansprüche, dadurch gekennzeichnet, daß die Reaktionstemperatur 50 bis 400 °C beträgt.

**Revendications**

1. Un procédé pour la production d'un tétraméthoxysilane en faisant réagir du silicium avec de l'alcool méthylique en présence d'un alcoolate de métal alcalin comme catalyseur, dans lequel le silicium a un diamètre particulaire moyen de 40 $\mu$m ou de moins de 40 $\mu$m et la réaction est effectuée, en plus, en présence de 1 à 10.000 parties en poids, par 100 parties en poids de silicium, d'un éther qui est un éther linéaire de la formule:

$R^1$-O-(X-O)$_m$-$R^2$

dans laquelle $R^1$ et $R^2$ sont chacun un groupement alkyle en $C_1$ - $C_6$, phényle ou benzyle; X est un groupement alkylène linéaire en $C_2$ - $C_8$ facultativement substitué par un groupement alkyle en $C_1$ - $C_4$, alcoxy en $C_1$ - $C_4$, alcoxyalkyle (dans lequel chaque groupement alkyle est un groupement alkyle en $C_1$ - $C_4$), phényle ou cyclohexyle et $m$ est un nombre entier de 1 à 8, à la condition que, lorsque $m$ est 2 ou plus grand que 2, les groupements X peuvent être différents.

2. Un procédé suivant la revendication 1, caractérisé en ce que, dans le composé éther de formule (I), $R^1$ et $R^2$ sont chacun un groupement alkyle en $C_1$ - $C_4$; X est un groupement alkylène linéaire en $C_2$ - $C_5$ de 2 à 5 atomes de carbone et m est un nombre entier de 1 à 5.

3. Un procédé suivant la revendication 2, caractérisé en ce que l'éther est l'éther diméthylique du diéthylène glycol ou l'éther diméthylique du triéthylène glycol.

4. Un procédé suivant l'une quelconque des revendications précédentes, caractérisé en ce que le composé éther est ajouté en une quantité de 100 à 5.000 parties en poids par 100 parties en poids de silicium.

5. Un procédé suivant l'une quelconque des revendications précédentes, caractérisé en ce que l'alcoolate de métal alcalin est utilisé en une quantité de 0.1 à 100 parties en poids par 100 parties en poids du composé éther.

6. Un procédé suivant l'une quelconque des revendications précédentes, caractérisé en ce que l'alcool méthylique est utilisé en une quantité de 4 à 20 moles par atome gramme de silicium.

7. Un procédé suivant l'une quelconque des revendications précédentes, caractérisé en ce que la température de la réaction est entre 50 et 400°C.